# EUROPEAN PATENT APPLICATION

(11) **EP 4 129 599 A1**
(43) Date of publication of application: **08.02.2023**
(21) Application number: 22185029.0
(22) Date of filing: 14.07.2022
(51) Int. Cl.: B28D 1/04, B28D 7/04, B28D 7/00, B23D 47/04, B25B 11/00

(54) **CUTTING SUPPORT FOR A CUTTING MACHINE AND RELATIVE CUTTING MACHINE**

(30) Priority: 04.08.2021 IT 202100021176
(71) Applicant: Sassomeccanica S.p.A., 63076 Monteprandone (AP) (IT)
(72) Inventor: CAROSELLI, TOMMASO, 63074 SAN BENEDETTO DEL TRONTO (AP) (IT)
(74) Representative: Baldi, Claudio

(57) **Abstract**

A cutting support (100) for a cutting machine (M) suitable for supporting a strip (9) to be cut; said cutting support (100) comprising: a frame (1) with L-shaped cross-section, comprising a horizontal element (10) and a vertical element (11), retention means (2) suitable for retaining the strip (9) toward the vertical element (11) of the frame, and a stop panel (3) having an inner surface facing the vertical element (11) of the frame and an outer surface (30) facing a lateral side of the strip (9); the retention means (2) include at least one suction cup means (20) displaced on the outer surface (30) of the stop panel (3) and pneumatic connection means (G) connected to the at least one suction cup means (20) and suitable for being connected to a suction device.

## Description

The present industrial invention relates to a cutting support for a cutting machine for the cutting of strips.

A further object of the present invention is a cutting machine comprising said cutting support.

Cutting machines equipped with cutting tools for cutting marble, granite and stone slabs are known. Such cutting machines are used both for cutting slabs used for paving, and for cutting panels and/or slabs for supporting or coating elements in general. Cutting discs are generally used as cutting tools.

When using said cutting machine to make strips for kitchen counters, coating or flooring starting from a slab, it is necessary to:
a) dispose the slab on a support surface of the cutting machine; generally the thickness of the slab is comprised between 2 cm and 3 cm;
b) activate the cutting disc to make a series of longitudinal through cuts on an upper surface of said slab, thus obtaining a series of strips with a smaller width than the initial slab;
c) make a series of transverse cuts on each strip obtained in step b) by means of the cutting disc;
d) finish the strip using other tools.

If the width of the slab is not exactly a multiple of the width of a single strip, the cutting process of the machine will originate a rejected strip with a lower width than the preset one that cannot be used for any of the above applications.

EP200273 discloses a cutting machine with a cutting support with an L-shaped cross-section according to the preamble of claim 1.

US4436078 discloses a cutting machine having a suction cup system for supporting a slab to be cut according to the preamble of claim 7.

The purpose of the present invention is to provide a cutting support capable of holding a strip to be thinned in vertical position, avoiding the need to modify the cutting head of the cutting machine.

Another purpose is to disclose a cutting support that is provided with efficient, effective, versatile and reliable retention means of the strip.

These purposes are achieved in accordance with the invention with the features listed in the appended independent claims 1 and 7.

Advantageous embodiments will appear from the dependent claims.

The cutting support according to the invention is defined by the independent claims 1 and 7.

The inventive idea at the base of the present invention is to use the rejected strips to make skirting boards to be disposed along the perimeter of a flooring. Starting from such an idea, the inventor had the problem of reducing the thickness of said rejected strips so that they could be used as skirting boards.

A skirting board of rectangular cross-section can have a reduced thickness compared to the thickness of the flooring because it is not subject to load and constant wear like the flooring. The reduced thickness of the skirting board has aesthetic advantages and avoids the accumulation of dust on the top edge of the skirting board.

Therefore, the strip used to make the skirting board must be thinned, that is to say, must be cut into layers with a lower thickness than the initial strip.

Such a cutting process is a complicated procedure due to the fact that, in order to reduce the thickness of said strips, it is necessary to make a cut perpendicular to the edge of the strip.

The possible solutions were:
- to leave the strip in horizontal position in the cutting station, modifying the structure and the handling of the cutting head in order to make cuts with the cutting disc arranged in horizontal position;
- to leave the cutting head unchanged, arranging the strip in vertical position, with one of its lateral sides resting on a horizontal surface.

It should be noted that the first solution is impaired by two major drawbacks, namely problems due to the volume of the cutting disc disposed in horizontal position and to the need to hold the upper portion of the strip being cut.

For the sake of explanatory clarity, the description of the cutting support according to the invention continues with reference to the appended drawings, which have only illustrative and non-limiting value, wherein:
Fig. 1 is an axonometric view of a cutting support according to the invention, on which a strip to be cut is arranged;
Fig. 2 is a view of the cutting support of Fig. 1 sectioned along a vertical plane II-II passing through the axis of a hole of suction cup means;
Fig. 3 is an axonometric view of an improvement of the cutting support of Fig. 1, on which a strip is arranged, cut by a cutting disc supported by a cutting head;
Fig. 4 is an axonometric view of the cutting support, viewed from the opposite side with respect to Fig. 3;
Fig. 5 is a view of the cutting support of Fig. 3 sectioned along a vertical plane passing through the axis of a hole of the suction cup means;
Fig. 6 is an axonometric view of a cutting machine comprising the cutting support according to the invention.

With reference to the Figures, a cutting support according to the invention is described, which is indicated with reference number 100.

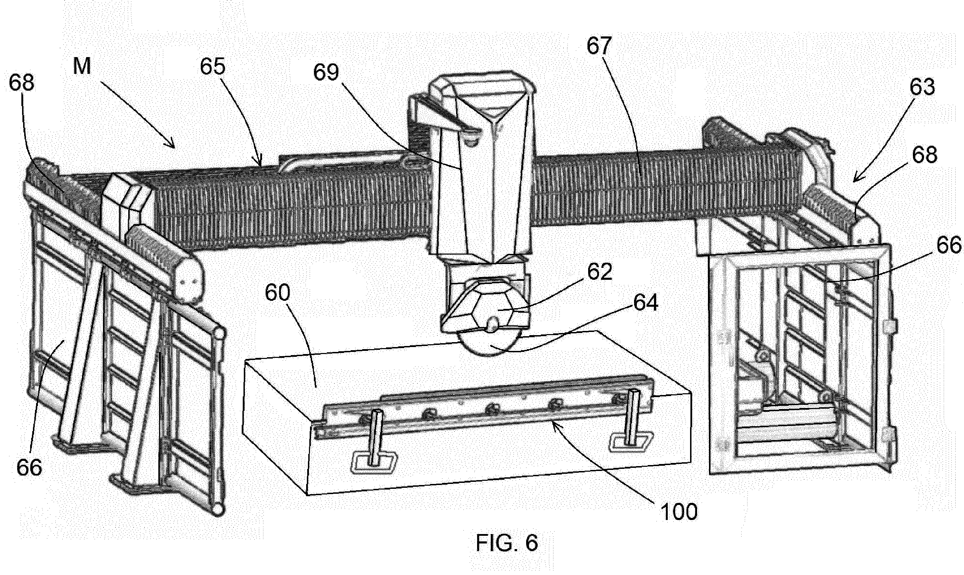

Fig. 6 illustrates a cutting machine (M) of bridge type provided with cutting means (64). Advantageously, the cutting means (64) are a vertically arranged cutting disc. The cutting machine (M) includes the cutting support (100) mounted on a work surface (60) arranged under the cutting means (64).

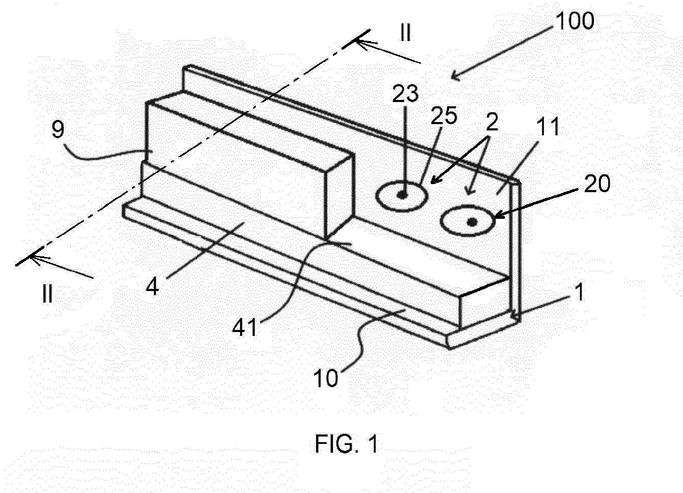

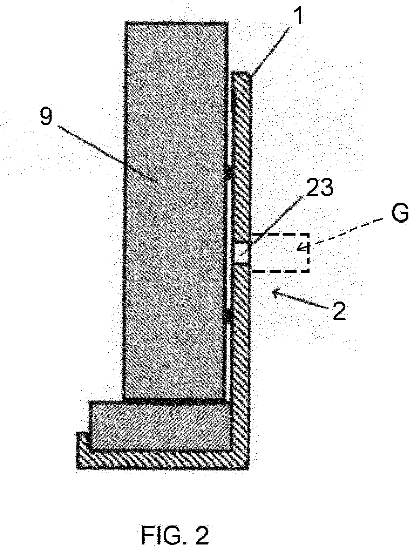

Referring to Figs. 1 and 2, the cutting support (100) is suitable for supporting a strip (9) of stone material, such as granite, marble or stone. The strip (9) is cut in such a way to obtain a slab with lower thickness than the initial strip.

The term "strip" indicates a slab-like element having a much greater length than the height and a much lower thickness than the height.

The strip (9) has a lower edge, an upper edge, two lateral sides, a front edge and a back edge. The strip (9) is arranged with the lower edge on the cutting support (100).

The cutting support (100) includes a frame (1) and retention means (2).

The frame (1) has an L-shaped cross section. The frame (1) includes a horizontal element (10) and a vertical element (11). The lower edge of the strip (9) faces the horizontal element (10) of the frame in such a way that a lateral side of the strip (9) faces the vertical element (11) of the frame.

The retention means (2) are arranged on the vertical element (11). The retention means (2) are suitable for holding the strip (9) toward the vertical element (11) of the frame.

The retention means (2) comprise at least one suction cup means (20) of pneumatic type disposed on the vertical element (11) of the frame (1) and suitable for retaining the strip (9) by creating a vacuum.

Said suction cup means (20) may include traditional suction cups comprising membranes disposed in seats of the vertical element of the frame.

Pneumatic connection means (G) are connected to the suction cup means (20). The pneumatic connection means (G) are suitable for being connected to a suction device so as to create an air vacuum between the suction cup means (20) and the strip (9).

Each suction cup means (20) includes a through hole (23) arranged in the vertical element of the frame and an annular seal (25) arranged around the through hole (23). The through hole (23) is connected to the pneumatic connection means (G) for creating a vacuum that attracts the strip so that the annular seal (25) is compressed by the strip (9).

The cutting support (100) includes a sacrificial panel (4) arranged above the horizontal element (10) of the frame in such a way that the strip (9) is arranged on the sacrificial panel (4). In this way, when cutting the strip (9), the cutting disc touches the sacrificial panel (4), protecting the horizontal element (10) of the frame.

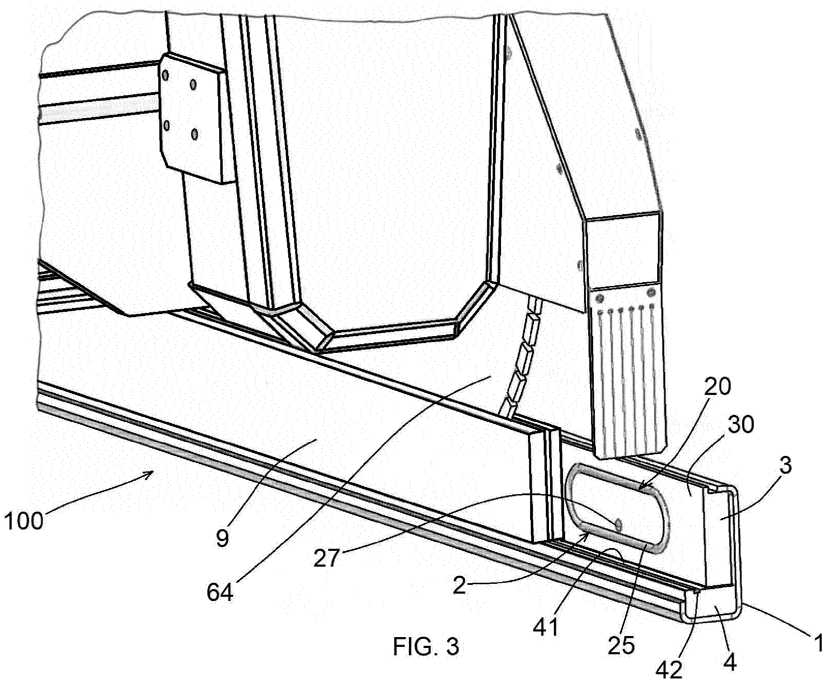

Referring to Figs. 3, 4 and 5, the cutting support (100) also includes a stop panel (3) arranged alongside the vertical element (11) of the frame.

The stop panel (3) includes an inner face facing the vertical element (11) of the frame and an outer surface (30) facing a lateral side of the strip (9).

In such a case, the retention means (2) comprise suction cup means (20) arranged on the outer surface (30) of the stop panel (3). Each suction cup means includes a through hole (27) obtained in the stop panel and communicating with a through hole (23) obtained in the vertical element (11) of the frame and an annular seal (25) arranged on the outer surface (30) of the stop panel around the through hole (27) of the stop panel. The pneumatic connection means (G) are connected to the suction cup means, that is to say, they are connected to the through holes (23, 27) of the vertical element and of the stop panel.

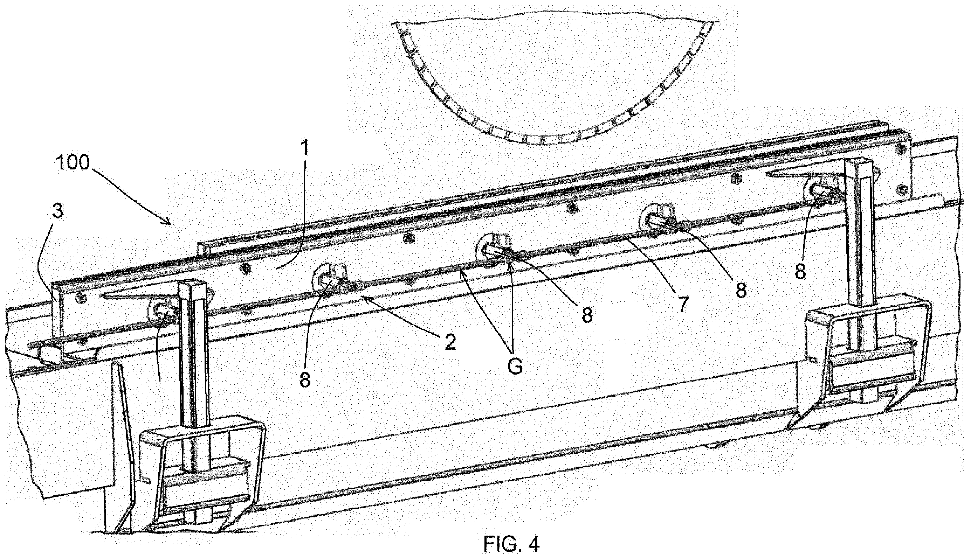

Referring to Fig. 4, the pneumatic connection means (G) comprise a duct (7), in which the air sucked by the suction device is conveyed, and solenoid valves (8) at each through hole (23) of the vertical element of the cutting support. The solenoid valves (8) can be selectively opened or closed to enable the operation of the suction cup means (20) according to the length of the strip (9) to be cut.

Each solenoid valve (8) communicates with a conduit communicating with the through hole (23) obtained in the vertical element (11) of the frame and consequently with the through hole (27) obtained in the stop panel (3). The solenoid valves (8) are located behind the vertical element (11) of the frame (1) and are connected in series via the conduit (7).

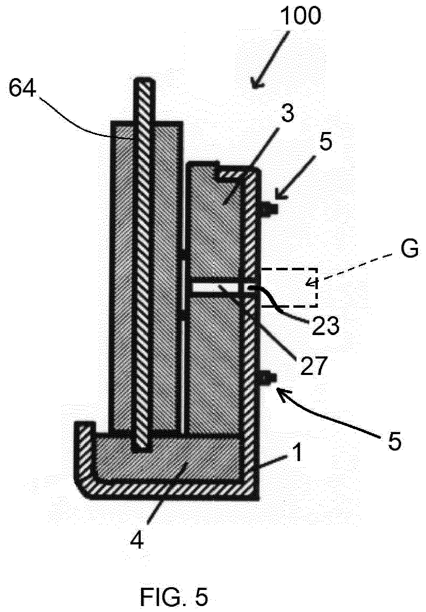

With reference to Figs. 4 and 5, the cutting support (100) includes an adjustment unit (5) to adjust the inclination of the stop panel (3) relative to the vertical element (11) of the frame (1). The adjustment unit (5) may include a plurality of adjustment screws (50).

Referring to Fig. 6, the cutting machine (M) includes an operating head (62) that supports the cutting means (64) above the work surface (60) on which the cutting support (100) is mounted. Handling means (63) move the operating head (62) relative to the work surface (60) or vice versa.

The operating head (62) is moved vertically by an actuator arranged in a carriage (69) moved by an overhead system (65) along two orthogonal axes. The carriage (69) is slidingly mounted on a beam (67). The beam (67) is slidingly mounted on two crossbeams (68) supported by sides (66) of the machine.

Obviously, the handling means (63) can be connected to the work surface (60) in order to move the work surface with respect to the cutting means (64).

Following is a description of the operation of the cutting machine (M). In order to cut the strip (9) and obtain a skirting board, the strip (9) is placed on the cutting support (100) in such a way that it can be cut into two layers with preset thickness.

The retention means (2) are activated as soon as the strip (9) is placed on the sacrificial panel (4), creating an air vacuum between the strip (9) and the outer surface (30) of the stop panel (3) defined by the seal (25), in such a way that the strip (9) is retained on the seal (25).

The retention means (2) enable the strip (9) to be retained on the outer surface (30) of the stop panel (3) without interfering with the cutting means (64).

In order to make the cut, the handling means (63) move the cutting means (64), bringing them closer to the strip (9) positioned on the cutting support (100), along a direction perpendicular to the sacrificial panel (4).

The retention means (2) are deactivated as soon as the strip (9) is cut, the retention means (2) in such a way to release a portion of the strip with the preset thickness.

The advantages of the cutting support (100) according to the invention appear obvious because it provides for facilitating the cutting of the strip (9) to reduce its thickness. In this way, rejected slabs from the previous flooring operations can be used in a way that reduces waste.

Although the present invention originates from the idea of recovering the rejected slabs from flooring operations, the cutting machine (M) provided with the cutting support (100) can cut any type of slab.

Numerous variations and modifications can be made to the present embodiment of the invention, within the reach of a person skilled in the art, but still within the scope of the invention as expressed by the appended claims.

## Claims

1. Cutting support (100) for a cutting machine (M); said cutting support (100) being suitable for supporting a strip (9) to be cut, said cutting support (100) comprising:
- a frame (1) with L-shaped cross-section, comprising a horizontal element (10) and a vertical element (11); wherein a lower edge of the strip (9) is directed towards the horizontal element (10) and a lateral side of the strip is directed towards the vertical element (11) of the frame,
- retention means (2) suitable for retaining said strip (9) towards said vertical element (11) of said frame (1), and
- a stop panel (3) having an inner surface facing said vertical element (11) of the frame and an outer surface (30) facing a lateral side of the strip (9);
**characterized by** the fact that
said retention means (2) comprise:
- at least one suction cup means (20) disposed on the outer surface (30) of said stop panel (3); and
- pneumatic connection means connected to said at least one suction cup means (20) and suitable for being connected to a suction device.

2. The cutting support (100) of claim 1, wherein said at least one suction cup means comprises:
- a through hole (27) obtained in said stop panel (3) and in communication with a through hole (23) obtained in said vertical element of the frame, connected to said pneumatic connection means (G); and
- an annular seal (25) disposed on said outer surface (30) of the stop panel around said through hole (27) of the stop panel.

3. The cutting support (100) of claim 2, comprising a plurality of suction cup means (20), wherein said pneumatic connection means (G) include a valve (8) disposed at each through hole (23) of the vertical element of the frame.

4. The cutting support (100) according to any one of the preceding claims, comprising a sacrificial panel (4) arranged over said horizontal element (10) of the frame and suitable for supporting the lower edge of the strip (9).

5. The cutting support (100) according to any one of the preceding claims, comprising an adjustment unit (5) to adjust the inclination of said stop panel (3) with respect to said vertical element (11) of the frame (1).

6. Cutting machine (M) comprising:
- a cutting support (100) according to any one of the preceding claims;
- an operating head (62) comprising cutting means (64) suitable for cutting a strip (9);
- handling means (63) connected to said operating head (62) and/or to said cutting support (100), for handling said operating head (62) and/or said cutting support (100).

7. Cutting support (100) for cutting machine (M); said cutting support (100) being suitable for supporting a strip (9) to be cut; said cutting support (100) comprising:
- a frame (1) with L-shaped cross-section, comprising a horizontal element (10) and a vertical element (11); wherein a lower edge of the strip (9) faces the horizontal element and a lateral side of the strip faces the vertical element (11) of the frame,
- retention means (2) suitable for retaining said strip (9) toward said vertical element (11) of said frame (1); wherein said retention means (2) comprise at least one suction cup means (20) disposed on said vertical element (11) of the frame (1), and
- pneumatic connection means (G) connected to said at least one suction cup means (20) and suitable for being connected to a suction device;
**characterized in that** said at least one suction cup means (20) comprises:
- a through hole (23) obtained in said vertical element (11) of the frame, connected to said pneumatic connection means (G); and
- an annular seal (25) arranged on said vertical element (11) of the frame, around said through hole (23) of the vertical element of the frame.

8. The cutting support (100) according to claim 7, comprising a plurality of suction cup means (20), wherein said pneumatic connection means (G) comprise a valve (8) disposed at each through hole (23) of the vertical element of the frame.

9. The cutting support (100) according to claim 7 or 8, comprising a sacrificial panel (4) disposed above said horizontal element (10) of the frame and suitable for supporting the lower edge of the strip (9).

10. Cutting machine (M) comprising:
- a cutting support (100) according to any one of claims 7 to 9;
- an operating head (62) comprising cutting means (64) suitable for cutting a strip (9);
- handling means (63) connected to said operating head (62) and/or said cutting support (100), for handling said operating head (62) and/or said cutting support (100).
